# EUROPÄISCHE PATENTSCHRIFT

(11) **EP 4 315 160 B1**
(45) Veröffentlichungstag und Bekanntmachung des Hinweises auf die Patenterteilung: **29.07.2026**
(21) Anmeldenummer: 22718585.7
(22) Anmeldetag: 23.03.2022
(51) Int. Cl.: G06K 19/077

(54) **KARTENKÖRPER, CHIPKARTE UND VERFAHREN ZUR HERSTELLUNG EINES KARTENKÖRPERS FÜR EINE CHIPKARTE**
CARD ELEMENT, CHIP CARD, AND PROCESS FOR MANUFACTURING A CARD ELEMENT FOR A CHIP CARD
CORPS DE CARTE, CARTE À PUCE ET PROCÉDÉ DE FABRICATION D'UN CORPS DE CARTE POUR UNE CARTE À PUCE

(30) Priorität: 25.03.2021 DE 102021001578
(43) Veröffentlichungstag der Anmeldung: 07.02.2024
(73) Patentinhaber: Giesecke+Devrient ePayments GmbH, 81677 München (DE)
(72) Erfinder: MINKS, Andreas, 83707 Bad Wiessee (DE)
(74) Vertreter: Giesecke+Devrient IP
(86) Internationale Anmeldenummer: PCT/EP2022/025117
(87) Internationale Veröffentlichungsnummer: WO 2022/199893

(56) Entgegenhaltungen:
- EP-A1- 3 716 397
- WO-A1-2014/113765
- WO-A1-2014/113765
- WO-A1-2017/007468
- WO-A1-2017/007468
- DE-A1- 102018 129 569
- DE-A1- 102018 129 569
- US-A1- 2016 268 672
- US-A1- 2016 268 672
- US-A1- 2020 250 504
- US-B2- 10 922 601

## Beschreibung

Die Erfindung betrifft einen Kartenkörper für eine Chipkarte, eine Chipkarte umfassend einen Kartenkörper und ein Chipmodul sowie ein Verfahren zur Herstellung eines Kartenkörpers für eine Chipkarte.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird in eine Kavität oder Modulöffnung des Kartenkörpers eingesetzt.

Im Folgenden werden Chipmodule beziehungsweise Chipkarten mit integrierter Spule betrachtet, welche eine berührungslose oder kontaktlose Kommunikation ermöglichen. Beispielsweise können Chipkartencontroller mit RFID-Funktionalität eingesetzt werden.

Die Energiekopplung von DI-Systemen mit einem zwei Spulensystem (SPS) erfolgt durch Metallaufbauten mit einem Spalt, bei dem der Magnet-/Stromfluß in den Metallflächen umgeleitet wird.

Der Funktionsweise einer solchen Karte besteht darin, dass ein Chipmodul verwendet wird, das selbst eine Spule enthält (Coil On Modul). Diese Spule koppelt auf den Kartenkörper mit einem Metallkern. Diese Kopplung funktioniert nur dann, wenn im Metallkartenkörper ein Schlitz enthalten ist. Dieser Schlitz wird benötigt, um den unerwünschten Ringschluss des magnetischen Flusses zu unterbinden.

Chipkarten mit einer metallischen Oberfläche sind besonders unempfindlich und werden als wertig angesehen. Daher ist die Ausbildung eines Schlitzes in der metallischen Oberfläche nachteilig.

Chipkarten mit äußerer Metallschicht ohne Schlitz erfordern zusätzlich zu der Spule im Modul eine weitere innenliegende Spule zur induktiven Kopplung. Dies ist ein nur aufwändig herzustellender Aufbau.

Derartige Chipkarten sind beispielsweise aus WO 2014/113765A1, DE 10 2018 129569A1 oder US 2020/250504 A1 bekannt.

Aufgabe der vorliegenden Erfindung ist es daher, einen verbesserten Aufbau eines Kartenkörpers beziehungsweise einer Chipkarte mit äußerer Metallschicht zur Verfügung zu stellen.

Diese Aufgabe wird durch einen Kartenkörper für eine Chipkarte, eine Chipkarte beziehungsweise ein Verfahren zur Herstellung eines Kartenkörpers für eine Chipkarte gemäß den unabhängigen Patentansprüchen gelöst. Ausgestaltungen und Weiterbildungen der Erfindung sind in den abhängigen Ansprüchen angegeben.

Ein erfindungsgemäßer Kartenkörper für eine Chipkarte umfasst
eine äußere Metallschicht mit einer ebenen Oberfläche unterbrochen nur von einer Modulöffnung zum Aufnehmen eines Chipmoduls, wobei sich die Modulöffnung bis zu einer Innenseite erstreckt,
eine an der Innenseite angeordnete Ferritschicht, wobei sich die Modulöffnung durch die Ferritschicht erstreckt,
eine an der Ferritschicht angeordnete innere Metallschicht, wobei sich ein Abschnitt der Modulöffnung mit verringertem Querschnitt durch die innere Metallschicht erstreckt, und wobei ein Schlitz vorgesehen ist, der sich von einer Umfangsfläche der inneren Metallschicht bis zu der Modulöffnung erstreckt und der sich durch die gesamte Dicke der inneren Metallschicht erstreckt, und
eine an der inneren Metallschicht angeordnete und aus einem Kunststoff bestehende Abschlussschicht.

Ein Grundgedanke der vorliegenden Erfindung besteht darin, dass der in der metallischen Schicht erforderliche Schlitz in das Karteninnere beziehungsweise an die abgedeckte Rückseite verlegt wird, so dass eine ebene und stabile äußere (vordere) metallische Schicht ermöglicht wird. Mittels der Ferritschicht können die für HF-Felder negativen Dämpfungen der äußeren metallischen Schicht beseitigt werden.

Der hier vorgeschlagene Kartenkörper hat somit den Vorteil, dass eine ebene und stabile metallische Vorderseite ohne Schlitz geschaffen wird. Damit ist die Karte mechanisch stabil, hat ein großes Gewicht und kann einfach produziert werden.

Es kann vorgesehen sein, dass die Schichten mittels eines Klebers verbunden sind. Dies erlaubt eine einfache und schnelle Herstellung eines Kartenkörpers oder einer Chipkarte. Der Kleber kann elektrisch isolierend oder nichtleitend sein, um so zum Beispiel im Bereich der Spule des Chipmoduls elektrische Kurzschlüsse zu vermeiden.

Es kann ferner vorgesehen sein, dass die Abschlussschicht aus mehreren Schichten besteht. Dies erlaubt Anpassungen an unterschiedliche Einsatzzwecke einer Chipkarte zum Beispiel durch optische Merkmale.

Es kann vorgesehen sein, dass die Abschlussschicht eine innere Schicht mit optischen Merkmalen und eine Overlay-Schicht umfasst. Das oder die optischen Merkmale können Sicherheitsmerkmale, Informationen und/oder Dekorelemente umfassen. Mittels einer oder mehr Overlay-Schichten lassen sich weitere optische Effekte erzielen und die innere Schicht kann geschützt werden.

Es kann ferner vorgesehen sein, dass die Oberfläche der äußeren Metallschicht mit einer Kunststoffschicht bedeckt ist. Die eine Kunststoffschicht oder noch weitere Kunststoffschichten können zum Beispiel für Sicherheitsmerkmale im optischen, IRund/oder UV-Bereich sowie Gestaltungsmerkmale verwendet werden. Zudem können Informationen zur Verfügung gestellt werden.

Es kann vorgesehen sein, dass sich die Modulöffnung bis in die Abschlussschicht hinein erstreckt. So kann auf einfache Art und Weise sichergestellt werden, dass die oberhalb der Abschlussschicht befindliche innere Metallschicht vollständig von der Modulöffnung durchdrungen ist. Dies erhöht den Energieeintrag in das Chipmodul, insbesondere in eine integrierte Schaltung des Chipmoduls. Dadurch wird die Leistungsfähigkeit der Chipkarte erhöht.

Eine erfindungsgemäße Chipkarte umfasst einen Kartenkörper wie zuvor beschrieben und ein in die Modulöffnung des Kartenkörpers eingebettetes Chipmodul mit einer Spule. Es gelten die gleichen Vorteile und Modifikationen wie zuvor beschrieben.

Es kann vorgesehen sein, dass die Spule in einem Umfangsbereich der Modulöffnung angeordnet ist, wobei der Umfangsbereich als eine Schulter im Übergang zwischen der Modulöffnung und dem Abschnitt der Modulöffnung mit verringertem Querschnitt ausgebildet ist. Auf dieser Schulter oder einem Absatz kann das Chipmodul mit der Spule aufgesetzt und befestigt werden. Dies erlaubt eine einfache Positionierung des Chipmoduls in der Modulöffnung.

Ein erfindungsgemäßes Verfahren zur Herstellung eines Kartenkörpers für eine Chipkarte umfasst die Schritte:
- Bereitstellen einer inneren Metallschicht mit einem Schlitz, der sich von einer Umfangsfläche der inneren Metallschicht bis zu einem Modulöffnungsbereich für die später zu erstellende Modulöffnung erstreckt und der sich durch die gesamte Dicke der inneren Metallschicht erstreckt,
- Anordnen einer Ferritschicht auf einer Seite der inneren Metallschicht,
- Anordnen einer äußeren Metallschicht an der Ferritschicht,
- Anordnen einer aus einem Kunststoff bestehenden Abschlussschicht an einer weiteren Seite der inneren Metallschicht,
- Ausnehmen einer Modulöffnung zum Aufnehmen eines Chipmoduls von der äußeren Metallschicht bis durch die innere Metallschicht, wobei die Modulöffnung in der inneren Metallschicht mit verringertem Querschnitt ausgenommen wird.

Die verschiedenen Schritte des Verfahrens können auch in anderen Reihenfolgen ausgeführt werden. Ansonsten gelten die gleichen Vorteile und Modifikationen wie zuvor beschrieben.

Die vorliegende Erfindung wird nachfolgend mit Bezug auf die beiliegenden Zeichnungen beispielhaft beschrieben. Darin zeigen
- Fig. 1:: eine Draufsicht einer Chipkarte;
- Fig. 2:: eine Schnittdarstellung der Chipkarte aus Fig. 1 gemäß der Linie I-I; und
- Fig. 3:: eine schematische Darstellung eines Verfahrens zur Herstellung eines Kartenkörpers.

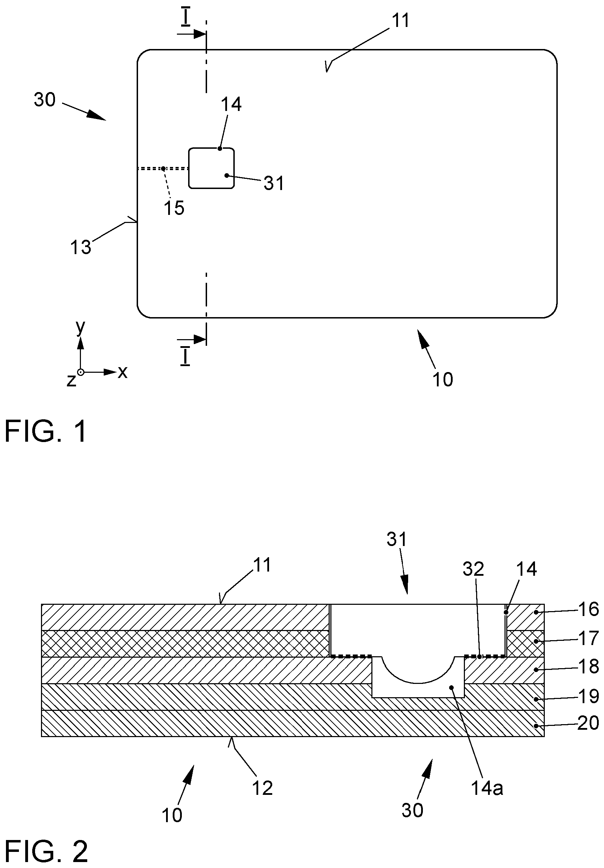

**Fig. 1** **zeigt** eine Chipkarte 30 mit einem Kartenkörper 10. Der Kartenkörper 10 hat eine im wesentlichen rechteckige Grundform mit zwei gegenüberliegenden Hauptflächen, von denen eine Hauptfläche 11 in Fig. 1 sichtbar ist. Die andere, gegenüberliegende Hauptfläche 12 ist in Fig. 2 dargestellt. Die beiden Hauptflächen 11, 12 verlaufen parallel zueinander und sind durch eine umlaufende Umfangsfläche 13 verbunden.

Der Kartenkörper 10 hat eine rechteckige Form in einer x-y-Ebene, in der die Umfangsfläche 13 mit zwei in x-Richtung verlaufenden Längsflächen und zwei in y-Richtung verlaufenden Stirnflächen liegt. Die Dicke oder Höhe des Kartenkörpers 10 erstreckt sich in z-Richtung.

Eine Modulöffnung 14 für ein Chipmodul 31 ist in der Hauptfläche 11 des Kartenkörpers 10 ausgenommen. Die Modulöffnung 14 erstreckt sich in den Kartenkörper 10 hinein. Die Modulöffnung 14 wird beispielsweise mittels eines Laserarbeitsganges oder Fräsarbeitsganges erstellt. Das Chipmodul 31 ist in die Modulöffnung 14 eingesetzt und dort zum Beispiel verklebt.

In dem Kartenkörper 10 ist ein Schlitz 15 vorgesehen, der sich von der Umfangsfläche 13 oder mit anderen Worten von einer Außenkante des Kartenkörpers 10 zu der Modulöffnung 14 erstreckt. Somit verbindet der Schlitz 15 die Modulöffnung 14 mit der Umfangsfläche 13. Der Schlitz 15 verläuft in y-Richtung, das heißt parallel zu der Längsfläche. Der Schlitz 15 hat zum Beispiel eine Breite zwischen 30 µm und 100 µm, bevorzugt zwischen 50 µm und 80 µm.

In Fig. 1 ist der Schlitz 15 auf einer linken Seite dargestellt. Der Schlitz 15 kann auch an einer rechten, oberen oder unteren Seite des Kartenkörpers 10 angeordnet sein. Der Schlitz 15 dient zur Vermeidung von Kurzschlussströmen beziehungsweise Wirbelströmen.

Fig. 2 zeigt eine Schnittdarstellung der Chipkarte 30 aus Fig. 1 gemäß der Linie I-I. Der Kartenkörper 10 der Chipkarte 30 ist ein Schichtenstapel mit zwei Hauptflächen 11 und 12, zwischen denen die einzelnen Schichten vorzugsweise parallel zueinander angeordnet sind. Die einzelnen Schichten können mittels Klebern, die zumindest zum Teil elektrisch isolierend sind, miteinander verbunden oder fixiert sein.

In dem in Fig. 2 dargestellten Schichtenstapel ist oben eine äußere Metallschicht 16 mit einer ebenen Oberfläche vorgesehen. Die ebene oder glatte Oberfläche bildet die Hauptfläche 11 des Kartenkörpers 10 beziehungsweise der Chipkarte 30. Die Oberfläche oder Hauptfläche 11 ist nur von der Modulöffnung 14 zum Aufnehmen des Chipmoduls 31 unterbrochen. Außer der Modulöffnung 14 befinden sich keine weiteren Öffnungen, Vertiefungen oder ähnliches in der Oberfläche oder Hauptfläche 11. Die Modulöffnung 14 erstreckt sich bis zu einer Innenseite der äußeren Metallschicht 16, welche der ebenen Oberfläche gegenüberliegt.

An der Innenseite der äußeren Metallschicht 16 ist eine Ferritschicht 17 angeordnet. Die Ferritschicht 17 gleicht eine dämpfende Wirkung der äußeren Metallschicht 16 auf den Empfang und die Übertragung von elektromagnetischen Feldern beziehungsweise HF-Signalen aus. Die Ferritschicht 17 reflektiert Feldlinien oder die Signale. Die erhöhte Energie steht dann einer Antenne oder Spule zur Verfügung. Die Ferritschicht 17 funktioniert gewissermaßen wie eine Isolierschicht für HF-Signale, wodurch die durch die Metallschicht 16 hervorgerufene Dämpfung kompensiert werden kann.

Die Ferritschicht 17 kann ein mikroskaliges, Eisenlegierungsferritmaterial aufweisen. Die Ferritschicht 17 kann aus Mikro- oder Nanopartikeln aus reinem Ferrit bestehen. Ebenso können mit Polymer beschichtete Partikel zum Einsatz gelangen, welche eine verbesserte Haftung auf einem Träger haben können.

Die Modulöffnung 14 erstreckt sich durch die gesamte Dicke oder Höhe der Ferritschicht 17 und hat einen identischen Querschnitt wie in der äußeren Metallschicht 16.

An die Ferritschicht 17 schließt sich eine innere Metallschicht 18 an, die aus dem gleichen Material, wie zum Beispiel einer V2A Legierung, wie die äußere Metallschicht 16 bestehen kann.

Die Modulöffnung 14 erstreckt sich auch durch die gesamte Dicke oder Höhe der inneren Metallschicht 18. Jedoch hat der in der inneren Metallschicht 18 verlaufende Abschnitt 14a der Modulöffnung 14 einen verringerten Querschnitt im Vergleich zu dem Querschnitt der Modulöffnung 14 in der äußeren Metallschicht 16 und der Ferritschicht 17.

In der inneren Metallschicht 18 ist der Schlitz 15 vorgesehen, der in der Darstellung der Fig. 2 nicht dargestellt ist. Der Schlitz 15 erstreckt sich von einer Umfangsfläche der inneren Metallschicht 18 bis zu der Modulöffnung 14 beziehungsweise bis zu dem Abschnitt 14a der Modulöffnung 14. Der Schlitz 15 erstreckt sich durch die gesamte Dicke der inneren Metallschicht 18.

An der inneren Metallschicht 18 ist eine Abschlussschicht angeordnet, die aus einem oder mehreren Kunststoffen oder elektrisch nichtleitenden Materialien besteht. Der Kunststoff kann zum Beispiel aus PET, PC, PVC oder PP bestehen.

Hier besteht die Abschlussschicht aus einer Druckschicht wie zum Beispiel einer inneren Schicht 19 mit optischen Merkmalen und einer Overlay-Schicht 20.

Die Modulöffnung 14 erstreckt sich bis in die Abschlussschicht hinein. In dem in Fig. 2 gezeigten Beispiel ragt ein Boden oder eine Grundfläche der Modulöffnung 14 in die innere Schicht 19 hinein. Die Modulöffnung 14 beziehungsweise der in der inneren Schicht 19 der Abschlussschicht verlaufende Abschnitt 14a der Modulöffnung 14 durchdringt die innere Schicht 19 nicht vollständig, sondern nur teilweise. Die teilweise Durchdringung der inneren Schicht 19 stellt sich, dass die innere Metallschicht 18 vollständig von der Modulöffnung 14 beziehungsweise von dem in der inneren Metallschicht 18 verlaufenden Abschnitt 14a der Modulöffnung 14 durchdrungen ist, so dass Feldlinien eines elektromagnetischen Felds möglichst verlustfrei passieren können.

Der in der inneren Schicht 19 der Abschlussschicht verlaufende Abschnitt 14a der Modulöffnung 14 hat einen identischen Querschnitt im Vergleich zu dem Querschnitt der Modulöffnung 14 in der inneren Metallschicht 18.

Die Chipkarte 30 umfasst ein Chipmodul 31, das in der Modulöffnung 14 angeordnet ist und dort zum Beispiel verklebt ist. Das Chipmodul 31 umfasst eine Spule 32. Das Chipmodul 31 umfasst ferner einen Chip, der zum Beispiel in einer Vergussmasse an einer Unterseite einer Kontaktflächenstruktur befestigt ist. Über die Spule 32 wird der Chip mit Energie und/oder Signalen versorgt. So kann ein aus der inneren Metallschicht 18 austretendes elektromagnetisches Feld in die Spule 32 eingekoppelt werden. Dabei verlaufen magnetische Feldlinien durch die Modulöffnung 14 beziehungsweise durch den Abschnitt 14a der Modulöffnung 14.

Die Ferritschicht 17 schirmt dabei die innere Metallschicht 18 ab und verbessert die elektromagnetischen Eigenschaften und damit die Leistungsfähigkeit der Chipkarte 30.

Der Kartenkörper 10 beziehungsweise die Chipkarte 30 kann zum Beispiel eine Dicke oder Höhe von etwa 920 µm betragen. Die Dicke des gesamten Kartenkörpers 10 sollte die maximale Dicke eines Chipkartenkörpers gemäß ISO 7810 nicht übersteigen.

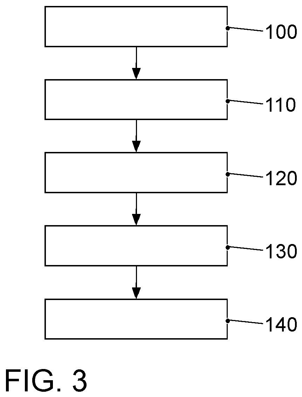

Fig. 3 zeigt eine schematische Darstellung eines Verfahrens zur Herstellung eines Kartenkörpers 10 für eine Chipkarte 30.

In einem ersten Schritt 100 erfolgt ein Bereitstellen der inneren Metallschicht 18 mit einem Schlitz 15, der sich von einer Umfangsfläche der inneren Metallschicht 18 bis zu einem Modulöffnungsbereich für die später zu erstellende Modulöffnung 14 erstreckt und der sich durch die gesamte Dicke der inneren Metallschicht 18 erstreckt. Die Modulöffnung 14 kann bereits erstellt sein oder zusammen mit dem Schlitz 15 erstellt werden. Der Schlitz 15 kann beispielsweise mittels eines Laserarbeitsganges oder Fräsarbeitsganges erstellt werden.

In einem zweiten Schritt 110 erfolgt ein Anordnen der Ferritschicht 17 auf einer Seite der inneren Metallschicht 18. Das Aufbringen des Ferrits kann zum Beispiel ähnlich wie beim Laserstrahldruck erfolgen. So kann eine elektrostatische Ladung auf eine rotierende Trommel aufgebracht werden, die das Ferrit aufnimmt. Der aufgebrachte Ferrit wird in der gewünschten Dicke auf die innere Metallschicht 18 aufgebracht und mit dieser wärmeverbunden. Ebenso ist es möglich eine vorgefertigte Ferritschicht 17 zum Beispiel in Form einer Matte zu verkleben.

In einem dritten Schritt 120 erfolgt ein Anordnen der äußeren Metallschicht 16 an der Ferritschicht 17. Dies kann zum Beispiel mittels eines Klebers erfolgen. Auch kann die Ferritschicht 17 mittels des oben beschriebenen Laserstrahldrucks oder eines Klebers zuerst an der äußeren Metallschicht 16 und dann an der inneren Metallschicht 18 angebracht werden.

In einem vierten Schritt 130 erfolgt ein Anordnen der aus einem Kunststoff bestehenden Abschlussschicht 19, 20 an einer weiteren Seite der inneren Metallschicht 18. In diesem Beispiel besteht die Abschlussschicht aus einer Druckschicht wie zum Beispiel einer inneren Schicht 19 mit optischen Merkmalen und einer Overlay-Schicht 20.

In einem fünften Schritt 140 erfolgt ein Ausnehmen der Modulöffnung 14 zum Aufnehmen des Chipmoduls 31. Die Modulöffnung 14 erstreckt sich von der äußeren Metallschicht 16, durch die Ferritschicht 17 und die innere Metallschicht 18 bis in die innere Schicht 19 der Abschlussschicht.

Die Modulöffnung 14 wird in der inneren Metallschicht 18 und in der inneren Schicht 19 der Abschlussschicht mit verringertem Querschnitt ausgenommen. So hat der in der inneren Metallschicht 18 verlaufende Abschnitt 14a der Modulöffnung 14 einen verringerten Querschnitt im Vergleich zu dem Querschnitt der Modulöffnung 14 in der äußeren Metallschicht 16 und der Ferritschicht 17. Bei der Erstellung der Modulöffnung 14 kann entweder zunächst der innenliegende Abschnitt 14a mit kleinerem Durchmesser oder Querschnitt (in den Schichten 18 und 18) erstellt werden oder zunächst der äußere Bereich der Modulöffnung 14 mit größerem Durchmesser oder Querschnitt (in den Schichten 16 und 17).

Die verschiedenen Schritte des Verfahrens können auch in anderen Reihenfolgen ausgeführt werden. Ebenso ist es möglich, mehrere Schichten in einem einzelnen Klebevorgang zusammenzufügen.

## Patentansprüche

1. Kartenkörper (10) für eine Chipkarte (30), aufweisend
eine äußere Metallschicht (16) mit einer ebenen Oberfläche unterbrochen nur von einer Modulöffnung (14) zum Aufnehmen eines Chipmoduls (31), wobei sich die Modulöffnung (14) bis zu einer Innenseite erstreckt,
eine an der Innenseite angeordnete Ferritschicht (17), wobei sich die Modulöffnung (14) durch die Ferritschicht (17) erstreckt,
eine an der Ferritschicht (17) angeordnete innere Metallschicht (18), wobei sich ein Abschnitt (14a) der Modulöffnung (14) mit verringertem Querschnitt durch die innere Metallschicht (18) erstreckt, und wobei ein Schlitz (15) vorgesehen ist, der sich von einer Umfangsfläche (13) der inneren Metallschicht (18) bis zu der Modulöffnung (14) erstreckt und der sich durch die gesamte Dicke der inneren Metallschicht (18) erstreckt, **gekennzeichnet, durch**
eine an der inneren Metallschicht (18) angeordnete und aus einem Kunststoff bestehende Abschlussschicht (19, 20).

2. Kartenkörper (10) nach Anspruch 1, **dadurch gekennzeichnet, dass** die Schichten (16, 17, 18, 19, 20) mittels eines Klebers verbunden sind.

3. Kartenkörper (10) nach Anspruch 1 oder 2, **dadurch gekennzeichnet, dass** die Abschlussschicht (19, 20) aus mehreren Schichten besteht.

4. Kartenkörper (10) nach Anspruch 3, **dadurch gekennzeichnet, dass** die Abschlussschicht (19, 20) eine innere Schicht (19) mit optischen Merkmalen und eine Overlay-Schicht (20) umfasst.

5. Kartenkörper (10) nach einem der Ansprüche 1 bis 4, **dadurch gekennzeichnet, dass** die Oberfläche der äußeren Metallschicht (16) mit einer Kunststoffschicht bedeckt ist.

6. Kartenkörper (10) nach einem der Ansprüche 1 bis 5, **dadurch gekennzeichnet, dass** sich die Modulöffnung (14) bis in die Abschlussschicht (19, 20) hinein erstreckt.

7. Chipkarte (30), umfassend einen Kartenkörper (10) nach einem der Ansprüche 1 bis 6 und ein in die Modulöffnung (14) des Kartenkörpers (10) eingebettetes Chipmodul (31) mit einer Spule (32).

8. Chipkarte (30) nach Anspruch 7, **dadurch gekennzeichnet, dass** die Spule (32) in einem Umfangsbereich der Modulöffnung (14) angeordnet ist, wobei der Umfangsbereich als eine Schulter im Übergang zwischen der Modulöffnung (14) und dem Abschnitt (14a) der Modulöffnung (14) mit verringertem Querschnitt ausgebildet ist.

9. Verfahren zur Herstellung eines Kartenkörpers (10) für eine Chipkarte (30) mit den Schritten:
- Bereitstellen einer inneren Metallschicht (18) mit einem Schlitz (15), der sich von einer Umfangsfläche (13) der inneren Metallschicht (18) bis zu einem Modulöffnungsbereich für die später zu erstellende Modulöffnung (14) erstreckt und der sich durch die gesamte Dicke der inneren Metallschicht (18) erstreckt,
- Anordnen einer Ferritschicht (17) auf einer Seite der inneren Metallschicht (18),
- Anordnen einer äußeren Metallschicht (16) an der Ferritschicht (17),
- Anordnen einer aus einem Kunststoff bestehenden Abschlussschicht (19, 20) an einer weiteren Seite der inneren Metallschicht (18),
- Ausnehmen einer Modulöffnung (14) zum Aufnehmen eines Chipmoduls (31) von der äußeren Metallschicht (16) bis durch die innere Metallschicht (18), wobei die Modulöffnung (14) in der inneren Metallschicht (18) mit verringertem Querschnitt ausgenommen wird.

## Claims

1. Card body (10) for a chip card (30), comprising
an outer metal layer (16) with a flat surface interrupted only by a module opening (14) for receiving a chip module (31), wherein the module opening (14) extends to an inner side,
a ferrite layer (17) arranged on the inner side, the module opening (14) extending through the ferrite layer (17),
an inner metal layer (18) arranged on the ferrite layer (17), wherein a section (14a) of the module opening (14) with a reduced cross-section extends through the inner metal layer (18), and wherein a slot (15) is provided which extends from a peripheral surface (13) of the inner metal layer (18) to the module opening (14) and which extends through the entire thickness of the inner metal layer (18), **characterised by** a sealing layer (19, 20) arranged on the inner metal layer (18) and consisting of a plastic.

2. Card body (10) according to claim 1, **characterised in that** the layers (16, 17, 18, 19, 20) are bonded together by means of an adhesive.

3. A card body (10) according to claim 1 or 2, **characterised in that** the sealing layer (19, 20) consists of several layers.

4. Card body (10) according to claim 3, **characterised in that** the top layer (19, 20) comprises an inner layer (19) with optical features and an overlay layer (20).

5. A card body (10) according to any one of claims 1 to 4, **characterised in that** the surface of the outer metal layer (16) is covered with a plastic layer.

6. Card body (10) according to any one of claims 1 to 5, **characterised in that** the module opening (14) extends into the sealing layer (19, 20).

7. A smart card (30) comprising a card body (10) according to any one of claims 1 to 6 and a chip module (31) with a coil (32) embedded in the module opening (14) of the card body (10).

8. A smart card (30) according to claim 7, **characterised in that** the coil (32) is arranged in a peripheral region of the module opening (14), wherein the peripheral region is formed as a shoulder at the transition between the module opening (14) and the section (14a) of the module opening (14) having a reduced cross-section.

9. A method for manufacturing a card body (10) for a smart card (30), comprising the steps of:
- providing an inner metal layer (18) with a slot (15) which extends from a circumferential surface (13) of the inner metal layer (18) to a module opening area for the module opening (14) to be formed subsequently, and which extends through the entire thickness of the inner metal layer (18),
- Arranging a ferrite layer (17) on one side of the inner metal layer (18),
- placing an outer metal layer (16) on the ferrite layer (17),
- arranging a sealing layer (19, 20) made of plastic on a further side of the inner metal layer (18),
- cutting a module opening (14) in the outer metal layer (16) to accommodate a chip module (31), extending through to the inner metal layer (18), wherein the module opening (14) is cut in the inner metal layer (18) with a reduced cross-section.

## Revendications

1. Corps de carte (10) pour une carte à puce (30), comprenant une couche métallique extérieure (16) présentant une surface plane, interrompue uniquement par une ouverture pour module (14) destinée à recevoir un module à puce (31), ladite ouverture pour module (14) s'étendant jusqu'à une face intérieure,
une couche de ferrite (17) disposée sur la face intérieure, l'ouverture pour module (14) s'étendant à travers la couche de ferrite (17),
une couche métallique interne (18) disposée sur la couche de ferrite (17), une partie (14a) de l'ouverture pour module (14), de section réduite, s'étendant à travers la couche métallique interne (18), et dans lequel est prévue une fente (15) qui s'étend depuis une surface périphérique (13) de la couche métallique interne (18) jusqu'à l'ouverture du module (14) et qui traverse toute l'épaisseur de la couche métallique interne (18), **caractérisé par**
une couche de finition (19, 20) disposée sur la couche métallique interne (18) et constituée d'une matière plastique.

2. Corps de carte (10) selon la revendication 1, **caractérisé en ce que** les couches (16, 17, 18, 19, 20) sont assemblées à l'aide d'un adhésif.

3. Corps de carte (10) selon la revendication 1 ou 2, **caractérisé en ce que** la couche de finition (19, 20) est constituée de plusieurs couches.

4. Corps de carte (10) selon la revendication 3, **caractérisé en ce que** la couche de finition (19, 20) comprend une couche interne (19) présentant des caractéristiques optiques et une couche de recouvrement (20).

5. Corps de carte (10) selon l'une des revendications 1 à 4, **caractérisé en ce que** la surface de la couche métallique extérieure (16) est recouverte d'une couche de matière plastique.

6. Corps de carte (10) selon l'une des revendications 1 à 5, **caractérisé en ce que** l'ouverture du module (14) s'étend jusqu'à la couche de finition (19, 20).

7. Carte à puce (30) comprenant un corps de carte (10) selon l'une des revendications 1 à 6 et un module à puce (31) comportant une bobine (32), encastré dans l'ouverture pour module (14) du corps de carte (10).

8. Carte à puce (30) selon la revendication 7, **caractérisée en ce que** la bobine (32) est disposée dans une zone périphérique de l'ouverture de module (14), ladite zone périphérique étant réalisée sous la forme d'un épaulement au niveau de la transition entre l'ouverture de module (14) et la partie (14a) de l'ouverture de module (14) présentant une section transversale réduite.

9. Procédé de fabrication d'un corps de carte (10) pour une carte à puce (30), comprenant les étapes suivantes :
- mise en place d'une couche métallique interne (18) comportant une fente (15) qui s'étend depuis une surface périphérique (13) de la couche métallique interne (18) jusqu'à une zone d'ouverture du module destinée à l'ouverture (14) à réaliser ultérieurement, et qui traverse toute l'épaisseur de la couche métallique interne (18),
- Disposition d'une couche de ferrite (17) sur un côté de la couche métallique interne (18),
- la mise en place d'une couche métallique extérieure (16) sur la couche de ferrite (17),
- la mise en place d'une couche de finition (19, 20) en matière plastique sur un autre côté de la couche métallique interne (18),
- découpage d'une ouverture pour module (14) destinée à recevoir un module à puce (31), depuis la couche métallique extérieure (16) jusqu'à travers la couche métallique intérieure (18), l'ouverture pour module (14) étant découpée dans la couche métallique intérieure (18) avec une section transversale réduite.
